# EUROPEAN PATENT SPECIFICATION

(11) **EP 3 760 581 B1**
(45) Date of publication and mention of the grant of the patent: **06.07.2022**
(21) Application number: 19760949.8
(22) Date of filing: 25.02.2019
(51) Int. Cl.: C01B 21/068, C04B 35/587

(54) **SILICON NITRIDE POWDER FOR SINTERING**
SILICIUMNITRIDPULVER ZUM SINTERN
POUDRE DE NITRURE DE SILICIUM POUR FRITTAGE

(30) Priority: 28.02.2018 JP 2018034547
(43) Date of publication of application: 06.01.2021
(73) Proprietor: Tokuyama Corporation, Shunan-shi, Yamaguchi 745-8648 (JP)
(72) Inventor: WAKAMATSU, Satoru, Shunan-shi, Yamaguchi 745-8648 (JP)
(74) Representative: J A Kemp LLP
(86) International application number: PCT/JP2019/007041
(87) International publication number: WO 2019/167879

(56) References cited:
- WO-A1-2016/171018
- CN-A- 1 673 070
- CN-A- 101 229 916
- CN-A- 101 857 441
- CN-A- 104 876 196
- JP-A- H02 248 308
- JP-A- 2015 081 205

## Description

### Technical Field:

This invention relates to a silicon nitride powder for sintering.

### Background Art:

Among a variety kinds of ceramic sintered bodies, a silicon nitride sintered body obtained by adding various kinds of sintering assistants to a silicon nitride powder followed by the sintering at a high temperature, features a small weight, a large mechanical strength, a large resistance against chemicals, a high electrically insulating property and the like properties, and has been used as wear resisting parts such as ball bearings and as high-temperature structural parts. By contriving the kinds of the assistants and the sintering conditions, furthermore, it is also allowable to improve the thermal conductivity. Therefore, the silicon nitride sintered body has also been used as heat-radiating substrate materials featuring small thickness and large strength.

As a method of synthesizing a silicon nitride powder, there has been known an imide thermal decomposition method comprising preparing an imide intermediate body by reacting a silicon tetrachloride with an ammonia, and thermally decomposing the imide intermediate body to obtain the silicon nitride powder (see a patent document 1). The silicon nitride powder synthesized by this method comprises grains of relatively uniform grain sizes having an average grain size of not more than 1 ***µ***m**,** and also is an **α** type silicon nitride powder having a high **α** conversion ratio. Upon elevating the temperature of sintering, the **α** type silicon nitride powder, when it is being sintered, undergoes the phase transition of from the **α** type into the ***β*** type. As a result, it is allowed to obtain a densely sintered body having a relative density of, for example, not less than 99% accounting for its widespread use at the present moment.

However, this method requires expensive compounds such as silicon tetrachloride and ammonia as starting materials and, besides, the process of production is very complex leaving room for improvements from the standpoint of production cost. Besides, the silicon nitride powder produced by this method has a sharp grain size profile. When sintered, therefore, the silicon nitride powder shows a very large coefficient of contraction which is also called "shrinkage factor" as will be described later leaving a problem in that the sintered body is accompanied by a large dimensional error.

There has also been known a direct nitriding method comprising nitriding the solid silicon to obtain a lump of aggregation thereof, and then milling the mass to prepare a silicon nitride powder (see a patent document 2). This method is advantageous in regard to that the starting materials are relatively inexpensive still leaving, however, problems concerning the cost of production and purity of the obtained silicon nitride powder. Namely, according to this method, the solid silicon is caused to gradually undergo the nitriding reaction from the surfaces thereof at a low temperature at which the solid silicon does not melt. Because of this reason, the solid silicon is rendered in advance to assume a very small grain size, and heavy metals are added thereto to serve as catalysts for the nitriding reaction or the nitriding reaction is carried out over very extended periods of time.

According to the method of the above patent document 2, furthermore, it is allowed to obtain either the silicon nitride powder of the ***α*** type or the silicon nitride powder of the ***β*** type if the nitriding reaction conditions are adjusted. To obtain the ***α*** type silicon nitride powder in a sufficiently dense form, the temperature of sintering must be elevated like in the patent document 1. The ***β*** type silicon nitride powder can be obtained even if the temperature of sintering is relatively low since the silicon nitride powder does not undergo the phase transition of from the ***α*** type into the ***β*** type when it is being sintered. However, it is very difficult to adjust the grain size of the ***β*** type powder obtained by this method so as to be suited for obtaining a densely sintered body thereof. Therefore, the ***β*** type silicon nitride powder could not be used in its own form.

Besides, according to the method of the patent document 2, the obtained silicon nitride powder of either the ***α*** type or the ***β*** type has a grain size profile broader than that of the powder obtained by the imide thermal decomposition method mentioned above without, however, having a grain size profile that enables the bulk density to be elevated to a sufficient degree. When sintered, therefore, the silicon nitride powder has a large coefficient of contraction and hence the sintered body obtained therefrom has a large coefficient of contraction, too, accompanied by a problem of large dimensional error.

There has also been known a method of synthesizing a silicon nitride by the direct nitriding method by utilizing the self-combustion method (self-propagating high temperature synthesis, SHS method)(see a patent document 3, Examples 3 and 4). The self-combustion method uses a silicon powder as the starting material, ignites part of the starting powder in a nitrogen atmosphere, and executes the synthesis reaction based on the self-heating of the starting compounds.

Though there is no description concerning the purity of the starting materials and the detailed production conditions, the Example 3 of the patent document 3 teaches that a carbon crucible filled with an Si powder of an average grain size of 20 ***µ***m was placed in a reaction vessel, the Si powder was ignited by being irradiated with a YAG laser of an output of 20 W in a 5-atm. nitrogen atmosphere, the laser irradiation was then discontinued, the combustion synthesis reaction was continued based on the subsequent self-heating, and there was obtained a fine powdery product.

Though, either, there is no description concerning the purity of the starting materials and the detailed production conditions, the Example 4 of the patent document 3, further, teaches that the carbon crucible filled with an Si powder of an average grain size of 5 ***µ***m was placed in the reaction vessel, the Si powder was ignited by being irradiated with the YAG laser of an output of 100 W in a 30-atm. nitrogen atmosphere, the laser irradiation was then discontinued, the combustion synthesis reaction was continued based on the subsequent self-heating, and there was obtained a fine powdery product.

The above method of producing the silicon nitride by the direct nitriding method by utilizing the self-heating is very advantageous from the standpoint of heat energy. With the method of the patent document 3, however, the pressure of the nitriding reaction is so high that the nitriding reaction sustains explosively causing the fine particles of the formed silicon nitride to be melt-adhered to each other. Therefore, there are formed very little fine particles that are necessary for obtaining a densely sintered body. By using the silicon nitride powder obtained by the above method, therefore, it is difficult to obtain the densely sintered body. Besides, there still remains the problem of large coefficient of contraction during the sintering.

Further, when the combustion synthesis reaction is carried out based on the self-heating by igniting the Si powder as described above, the starting Si powder is heated and undergoes the reaction at one time causing, therefore, the Si to be melted and adhere during the reaction. Therefore, the WO2018/110565 laid open after the priority date of the present patent application proposes a means according to which the starting Si powder is mixed with not less than 10% by mass of the silicon nitride powder as the diluting agent. It is described that by using the diluting agent, the combustion reaction proceeds mildly preventing the Si from melting and adhering.

When the diluting agent is used, however, the reaction proceeds mildly, and no strong melt-adhesion takes place among the particles. Most of the large-sized particles are finely milled through the dry milling. As a result, it becomes difficult to obtain a silicon nitride powder that is capable of being sintered to a high degree while suppressing the shrinkage factor.

Patent document 4 discloses a method for preparing beta-silicon nitride powder.

Patent document 5 discloses a method for preparing alpha-silicon nitride powder.

Patent document 6 discloses a method for preparing beta-silicon nitride by a combustion synthesis method.

Patent document 7 discloses a method for combustion synthesis of silicon nitride powder by using polytetrafluoroethylene as an additive.

### Prior Art Documents:

### Patent Documents:

Patent document 1: Japanese Patent Laid-Open No. 2000-159512
Patent document 2: Japanese Patent Laid-Open No. 2011-51856
Patent document 3: Japanese Patent Laid-Open No. 2000-264608
Patent document 4: Chinese Patent CN 101 857 441 A
Patent document 5: Chinese Patent CN 1 673 070 A
Patent document 6: Chinese Patent CN 104 876 196 A
Patent document 7: Chinese Patent CN 101 229 916 A

### Outline of the Invention:

### Problems that the Invention is to Solve:

In producing a silicon nitride powder by the direct nitriding method by utilizing the self-combustion, therefore, it is an object of the present invention to provide a silicon nitride powder for sintering from which an excellently and densely sintered body can be obtained yet lowering the coefficient of contraction during the sintering and maintaining a high dimensional precision.

### Means for Solving the Problems:

The present inventors have conducted experiments and study extensively concerning the methods of producing silicon nitride powders by the direct nitriding method by utilizing the self-combustion. As a result, the inventors have discovered a novel knowledge that there can be obtained a silicon nitride powder which contains fine grains and large grains maintaining a good balance, the grains being chiefly the ***β*** type silicon nitride, and which can be excellently sintered provided substantially the silicon powder alone is used as the starting material powder without using diluent, and is subjected to the combustion synthesis reaction under specific conditions and provided the resulting massive combusted product is drymilled. The present invention was thus completed.

That is, according to the present invention, there is provided a silicon nitride powder for sintering that has a ***β*** conversion ratio of not less than 80%, an average grain size D₅₀ of 0.5 to 1.2 ***µ***m as measured by the laser diffraction·light scattering method, a ratio of grains of not larger than 0.5 ***µ***m of 20 to 50% by mass, and a ratio of grains of not smaller than 1 ***µ***m of 20 to 50% by mass.

It is desired that the silicon nitride powder has a BET specific surface area in a range of 10 to 40 m²/g and, specifically, in a range of not smaller than 20 m²/g.

### Effects of the Invention:

The silicon nitride powder of the present invention can be produced by relying on the combustion synthesis reaction, i.e., the direct nitriding by utilizing the self-combustion. Here, to obtain the silicon nitride powder that contains fine granules and large granules maintaining a predetermined balance, the process employs the combustion synthesis method that is executed under predetermined conditions by using, as the starting material powder, substantially the silicon powder alone without using any diluent. Besides, the obtained massive product is milled by a dry method. Upon suitably selecting the starting material powder, reaction conditions and milling conditions to execute the reaction, the obtained silicon nitride powder chiefly comprises the ***β*** type silicon nitride powder. Even if, for example, the ***β*** conversion ratio is in a range of not less than 80%, therefore, the silicon nitride powder can be excellently sintered. Upon sintering the powder in a customary manner, therefore, there can be obtained a highly densely sintered body having a relative density of not less than 99%, the sintered body having a very low coefficient of contraction and maintaining a stable shape free of dimensional error.

In the invention, the coefficient of contraction of the sintered body is evaluated in terms of the shrinkage factor described in the Examples.

When the ***α*** type silicon nitride is sintered, in general, there takes place a phase transition of from the ***α*** type into the ***β*** type, and a densely sintered body is obtained due to the phase transition. When the ***β*** type silicon nitride is treated, however, there takes place no such phase transition. With the conventional technologies, therefore, even when the ***β*** type silicon nitride was sintered at a temperature lower than that of the case of the ***α*** type, grains did not grow during the sintering, and a densely sintered body could not be obtained.

On the contrary, the silicon nitride powder of the present invention is chiefly the ***β*** type silicon nitride powder. Despite of this fact, the silicon nitride powder can be excellently sintered probably because the silicon nitride powder contains coarse grains and fine grains maintaining a predetermined balance. This gives rise to the occurrence of the so-called Ostwald ripening phenomenon in which the fine grains dissolve and precipitate in a liquid phase surrounding the large grains during the sintering, and thus a densely sintered body can be obtained.

According to the present invention as described above, it is allowed to obtain, relying on an inexpensive means, a powder that chiefly comprises the ***β*** type silicon nitride that can be excellently sintered offering a very great industrial advantage.

### Modes for Carrying Out the Invention:

The present invention is a silicon nitride powder, which may be produced by the direct nitriding by utilizing the self-combustion, and has a great feature on a point of so setting that the obtained silicon nitride powder has a specific grain size profile. Therefore, the silicon nitride powder will be described below first prior to describing the individual steps in a process for its production.

### <Silicon nitride powder>

The silicon nitride powder of the present invention has a ***β*** conversion ratio of not less than 80%, chiefly comprises the ***β*** type silicon nitride, and has a grain size profile as described below.

Here, the grain size profile is measured as described in the Examples appearing later. Namely, the silicon nitride powder is added together with a dispersing agent to an aqueous medium, and is dispersed therein to disintegrate the aggregated grains by the application of ultrasonic waves under conditions described in detail in the Examples appearing later. Thereafter, the grain size profile is measured relying on the laser diffraction·light scattering method. Further, the average grain sizes D₅₀ are all values on the 50% volume basis as measured by the laser diffraction·light scattering method unless stated otherwise.
Average grain size D₅₀ on the 50% volume basis:
   0.5 to 1.2 ***µ***m, preferably 0.7 to 1.7 ***µ***m
Ratio of the grains (S grains) of 0.5 ***µ***m or smaller:
   20 to 50% by mass, preferably 20 to 40% by mass
Ratio of the grains (L grains) of 1 ***µ***m or larger:
   20 to 50% by mass, preferably 20 to 40% by mass

As will be understood from the above grain size profiles, the silicon nitride powder contains fine S particles and large L particles maintaining a predetermined balance. This grain size profile helps express the Ostwald ripening during the sintering and obtain a densely sintered body suppressing the shrinkage factor during the sintering. For instance, if any of the average grain size D₅₀, the ratio of S grains or the ratio of L grains is out of the above-mentioned ranges, then the Ostwald ripening is not effectively expressed and the sintering property is impaired. Therefore, the obtained sintered body has a decreased density and an increased shrinkage factor through the sintering.

In the invention, further, under the condition that the above-mentioned grain size profile is maintained, it is desired that the mass ratio (S/L) of the S grains and the L grains is not less than 0.6, specifically, in a range of 0.7 to 2 and, most preferably, in a range of 0.6 to 1.5. Upon containing the S grains and the L grains at the above-mentioned ratios, the S grains melt-adhere to the L grains during the sintering and there can be obtained a sintered body having more increased density. Moreover, the shrinkage factor can be more effectively decreased during the sintering.

It is, further, desired that the ratio occupied by coarse grains (LL grains) of not smaller than 10 ***µ***m is smaller than 3% by mass and, specifically, smaller than 1% by mass. Upon decreasing the ratio of the coarse LL particles, it is made possible to obtain a densely and homogeneously sintered body while effectively suppressing a local decrease in the strength of the sintered body.

Here, though it needs not be described, in case the sum of the S grains, L grains and LL grains fail to reach 100% by mass, it is desired that the rest comprises grains having grain sizes (0.5 to 1 ***µ***m) between the S grains and the L grains, and that these grains are present at a ratio of 20 to 40% by mass.

The above-mentioned grain size profile is measured by the laser diffraction·light scattering method, and the presence of very fine grains of the order of nanometers cannot be confirmed. To interpolate the amount of such very fine grains that may be present, therefore, it is desired to measure the BET specific surface areas in addition to the grain size profiles. Specifically, the silicon nitride powder that can be excellently sintered has a BET specific surface area in a range of 10 to 40 m²/g. In particular, the silicon nitride powder of which the lower limit BET specific surface area is 15 m²/g and, more preferably, 20 m²/g, is advantageous in obtaining a very highly densely sintered body having a large strength. The larger the BET specific surface area, the more the amount of the fine S grains.

Moreover, the silicon nitride powder having the above-mentioned grain size profile acquires a pressurized bulk density of not less than 1.7 g/cm³ when it is press-formed with a pressure of 0.2 tons/cm². Acquiring such a large bulk density also serves as a factor for suppressing the shrinkage factor during the sintering.

To find the pressurized bulk density, the silicon nitride powder is formed into a disk-like pellet with the pressure of 0.2 tons/cm², the weight of the pellet is measured using a precision balance, the thickness and the diameter of the pellet are measured using a micrometer or the like instrument, and the volume of the formed body is calculated. By using the above measured values, the pressurized bulk density is calculated as "weight ÷ volume".

### <Production of the silicon nitride powder>

The silicon nitride powder having the grain size profile described above is produced by using a predetermined starting material powder, filling the starting material powder in a heat-resistant reaction vessel, igniting the starting material powder filled in the reaction vessel in a nitrogen atmosphere under specific conditions so that a massive product is formed by the combustion synthesis reaction, and mechanically milling the massive product.

### Starting material powder;

Starting material powder that contains the silicon powder in an amount not less than 90% by mass, preferably, not less than 95% by mass and, specifically, not less than 98% by mass is used to prepare silicon nitride powder according to the invention. This is because if the staring material powder contains the components other than the silicon powder or contains the diluent such as silicon nitride in large amounts or, concretely, in amounts of not less than 10% by mass, then the silicon undergoes the self-combustion diffusion mildly during the combustion synthesis reaction, the obtained silicon nitride powder as a whole contains much fine grains (S grains), and it becomes difficult to obtain the silicon nitride that can be excellently sintered. That is, by using substantially only the silicon powder as the starting material powder and igniting the powder so as to undergo the combustion synthesis reaction, the heat produced by the self-combustion silicon diffuses at a suitable rate to help execute the reaction. By executing the milling after the firing, therefore, it is made possible to obtain a silicon nitride powder having such a grain size profile that includes small grains (S grains) as well as large grains (L grains) in suitable amounts.

Therefore, the starting material powder may contain powders other than the silicon in the range described above in which the combustion synthesis reaction is not affected. Concretely, such powders may include a silicon nitride powder that has heretofore been used as a diluent, a powder adhered to the surfaces of the massive products obtained as a result of executing the combustion synthesis method and, depending on the cases, a silicon nitride powder obtained by scraping off the surface layer of the massive products. According to the present inventor's study, in particular, the powder adhered to the surfaces of the massive products and, depending on the cases, the silicon nitride powder obtained by scraping off the surface layer of the massive products, in many cases, contain unreacted silicon. Therefore, recycling this kind of powder helps improve the ratio of utilizing the silicon powder and is industrially advantageous.

On the other hand, use of the metal catalysts that have heretofore been known is not recommended since they lower the purity of the silicon nitride powder that is obtained.

It is, further, desired that the silicon powder used as the starting material powder has an average grain size D₅₀ in a range of 1 to 10 ***µ***m from the standpoint of obtaining the silicon nitride powder having the above-mentioned grain size profile. When the average grain size D₅₀ lies outside the above range, the silicon nitride powder that is obtained tends to contain S grains or L grains in unnecessarily large amounts despite the milling conditions that will be described later are adjusted.

Further, when the powders, other than the silicon powder, such as silicon nitride powder and the like powder are to be added to the starting material powder, it is recommended that such powders, too, have average grain sizes D₅₀ that lie in the above-mentioned range.

In connection with the above-mentioned matters, further, it is desired that the silicon powder used as the starting material powder is a silicon powder of a high purity containing, for example, Al and Fe in amounts of not more than 200 ppm, respectively. Presence of these metals causes a decrease in the sintering property of the silicon nitride powder that is obtained and may, further, cause a decrease in the properties such as strength and the like of the sintered body that is obtained. Due to the same reasons, furthermore, it is desired that high-melting metals such as W and Mo are contained in amounts of not more than 200 ppm.

It is desired that the silicon powder of high purity has its surfaces oxidized to a suitable degree. This is because the oxide film formed on the surfaces of the silicon powder serves as an important factor for suitably controlling the progress of the combustion synthesis reaction. As for the method of oxidizing the surfaces to a suitable degree, a simple method would be to mill the silicon powder in the air to assume the grain sizes that lie in the range described above. For instance, there can be preferably employed a jet mill using the air. The degree of oxidizing the silicon powder should be suitably determined to lie in a range in which the combustion synthesis reaction is not impaired. Concretely, it is desired that oxygen is contained in an amount of about 0.1 to about 1% by mass relative to the weight of the silicon powder. When the amount of oxygen in the silicon powder is smaller than the above range, the temperature of combustion tends to become excessively high during the nitriding reaction. When the amount of oxygen is larger than the above range, on the other hand, the nitriding reaction tends to be suppressed giving rise to the occurrence of such problems as poor ignition and residence of unreacted silicon.

The silicon powder of high purity used as the starting material powder may be the one obtained by any method so far as its purity and grain size have been adjusted to lie within predetermined ranges. Usually, however, it would be economical to use the silicon powder of high purity that is obtained by recovering fine powder generated in the step of producing nuggets by milling the semiconductor polycrystalline silicon rods.

The above-mentioned silicon powder of high purity used as the starting material powder is filled in a heat-resistant reaction vessel (setter) made of ceramics or graphite. In this case, it is desired that the silicon powder layer filled in the reaction vessel is wrapped around its upper surface and surfaces contacting to the reaction container with a graphite fiber, a porous ceramic board or a silicon nitride powder such that the heat generated by the reaction will not radiate to the surroundings.

In conducting the combustion synthesis reaction, furthermore, an igniting agent containing a powder of Ti, Al, etc. may be added to a portion that becomes the point of ignition. As a matter of course, the amount of the igniting agent should be so small as will not affect the sintering property of the silicon nitride powder that is obtained. The igniting agent can be arranged at any place such as at an end portion of the silicon layer, at a central portion thereof, or at any place which may be one place or many places.

### Ignition and combustion synthesis reaction conditions;

As described above, the starting material powder is filled in the reaction vessel. Thereafter, the interior of the reaction vessel is purged with nitrogen, and the starting material powder is ignited in a nitrogen atmosphere.

Usually, the reaction vessel is installed in a pressure-resistant sealed reactor equipped with an igniting device and a gas feed/discharge mechanism, the pressure in the reactor is reduced to remove the air and, thereafter, a nitrogen gas is fed to purge with nitrogen.

The reaction is executed under the application of pressure which, concretely and preferably, is 100 kPaG to 1 MPaG. The pressure is attained from the nitrogen pressure fed into the closed reactor.

When the pressure in the closed reactor is smaller than the above range, the unreacted product increases due to misignition during the reaction and the yield tends to decrease. When the pressure is large, on the other hand, the reaction temperature increases excessively to form coarse silicon masses and causes the finally obtained silicon nitride powder to contain much coarse LL grains which are difficult to mill. Therefore, it becomes difficult to secure the above-mentioned grain size profile.

It is necessary to set the bulk density of the starting material powder to lie in a range of 0.3 to 1.0 g/cm³ at the time of igniting the starting material powder. Upon conducting the combustion reaction by igniting the starting material powder while adjusting its bulk density to lie in the above range, it is made possible to suppress the residence of the unreacted product, to react the whole starting material powder, and to obtain a massive product that contains the silicon nitride grains adapted to obtaining the silicon nitride powder that has the above-mentioned grain size profile.

In this case, it is necessary to carefully feed the nitrogen gas so that the bulk density will not increase in excess of the above-mentioned range at the time of igniting the starting material powder being caused by the nitrogen pressure that is fed for purging.

The starting material powder is ignited in a state of being adjusted to acquire the above-mentioned bulk density, and the silicon powder is directly reacted due to the self-combustion that spreads in the state where the starting material powder is being pressurized with nitrogen, i.e., in the nitrogen atmosphere of 100 kPaG to 1 MPaG.

The ignition in this case can be executed by a conventional method, such as the ignition based on an arc discharge by using a pair of electrodes attached to the closed reactor, the ignition by the heat generated by flowing an electric current to a carbon heater or a metallic heater, or the ignition based on the irradiation with a laser beam.

After having been ignited as described above, the starting material powder combusts by itself and the combustion spreads in short periods of time. The reaction temperature then elevates to, for example, 1500 to 2000°C, and the massive product (i.e., the massive product of silicon nitride) is obtained through the combustion synthesis reaction which is based on the direct reaction of silicon with nitrogen.

### Massive product;

The massive product is obtained by executing the combustion synthesis reaction as described above. The massive product comprises the coarse grains that cannot be easily milled by the mechanical milling that will be described later and the aggregates of fine grains that can be milled into fine grains. Then relying upon the above-mentioned constitution, the massive product is thoroughly milled in a mechanical manner to obtain the silicon nitride powder of the invention in which the L grains and the S grains are present maintaining a suitable balance.

### Mechanical milling;

The massive product obtained through the combustion synthesis reaction is mechanically milled to obtain the silicon nitride powder of the invention that chiefly comprises the ***β*** type silicon nitride and that has the grain size profile as desired. Here, it is important that the mechanical milling is executed by a dry method. With the wet type milling by using a liquid medium such as water or the like, the milling pressure is exerted uniformly, which is advantageous in obtaining a fine powder. This, however, is disadvantageous when it is attempted to obtain a powder having such a grain size profile that the L grains are contained therein together with the S grains maintaining a suitable balance. That is, the massive product obtained by the reaction described herein contains the aggregated grains that can be easily milled and the coarse grains that cannot be easily milled maintaining a suitable balance. Upon dry-milling the massive product described herein, therefore, it is made possible to form the fine powder while leaving large L grains in a predetermined amount and yet securing the S grains in a sufficient amount. Thus there is obtained the silicon nitride powder that has a desired grain size profile and a BET specific surface area lying in a predetermined range.

It is also allowable to constitute the silicon nitride powder of the present invention that contains the S grains and the L grains at a specific ratio by milling the massive product in a multiplicity of ways by varying the milling conditions, by preparing a multiplicity of kinds of milled products having different grain size profiles, and suitably mixing them together.

The dry milling is carried out by using a milling machine such as vibration mill, beads mill or airflow mill (jet mill). As a known measure for suppressing the contamination with heavy metals during the milling, there is a method that uses the material same as the silicon nitride as the medium for milling. For example, the airflow milling based on the jet mill lets the powders collide with each other, and is, therefore, most desired from the standpoint of preventing contamination. Further, even with the methods based on the vibration mill and beads mill, there is no problem of contamination if the balls made of the material same as the silicon nitride are used as the medium for milling. Here, the medium for milling, too, is subject to wear out though only a very little. Therefore, there should be used a medium containing little contaminants.

As for preparing the silicon nitride balls to serve as the medium for milling, the cost of preparation increases if it is attempted to obtain a wear-resistant sintered body from the silicon nitride alone. In order to prepare the medium at a low cost, therefore, there can be employed a method that carries out the sintering by also mixing sintering assistants such as yttria, magnesia, alumina, etc. Selection of the sintering assistants poses no problem for the production of the silicon nitride powder for sintering provided the selected components are permissible for the production of the desired silicon nitride powder. When the silicon nitride powder is to be milled by using the vibration mill or the beads mill based on the dry method, it is recommended to continue the milling by adding alcohols such as ethanol or isopropyl alcohol or water in very small amounts. These components work as milling assistants to accelerate the milling and, therefore, to shorten the milling time. The milling assistants are added in amounts in a range in which the milled product can be maintained in a dry state. The milling assistant is added in an amount in a range of, desirably, 0.1 to 2% by mass relative to the silicon nitride powder that is to be milled though the amount of the milling assistant may vary depending upon the kind thereof.

### <Production of the silicon nitride sintered body>

The silicon nitride powder obtained as described above has the grain size profile as described above and comprises chiefly the ***β*** type silicon nitride, yet exhibiting excellent sintering property and, besides, suppressing the shrinkage factor to a low degree during the sintering. Therefore, the silicon nitride powder is used for being sintered to obtain a sintered body that features a high dimensional precision.

By using the silicon nitride powder, the sintered body can be produced by a method known per se.

For example, the silicon nitride powder is mixed with the sintering assistant such as yttria, magnesia, zirconia or alumina, and is press-formed to obtain a formed body having a bulk density of not less than 1.7 g/cm³, specifically, not less than 1.85 g/cm³ and, more preferably, not less than 1.95 g/cm³. The formed body is then fired to obtain a sintered body having a decreased shrinkage factor.

The press forming is representatively a monoaxial press forming. Desirably, however, the monoaxial press forming is followed by the CIP (cold isostatic press) forming.

The firing is conducted in a nitrogen atmosphere at 1700 to 2000°**C**. The density of the sintered body is dependent upon both the firing temperature and the firing time. When fired at, for example, 1700°**C**, the firing time is about 3 to about 20 hours. When fired at a temperature of not lower than 1850**°C**, the silicon nitride itself may be decomposed if the firing time is too long and, therefore, the density of the sintered body may often decrease. In such a case, the silicon nitride powder is sintered in an atmosphere of a pressure elevated with nitrogen in order to suppress the decomposition of the silicon nitride sintered body. The higher the nitrogen pressure, the more the decomposition of the silicon nitride can be suppressed. However, the pressure of less than 1 MPa is preferably employed due to the economic reasons such as pressurewithstanding capability of the apparatus.

It is desired to conduct the firing in a nitrogen atmosphere of an elevated pressure at not lower than 1800°**C** in order to obtain a highly densely sintered body specifically having a relative density of not less than 99%.

According to the present invention as described above, it is made possible to obtain a sintered body having a high density, i.e., a relative density of not less than 99%, a large strength and a low shrinkage factor even by using the ***β*** type silicon nitride powder having a high ***β*** conversion ratio, with which it was so far regarded difficult to obtain a densely sintered body. There is thus obtained a sintered body having excellent properties such as thermal conductivity, strength, dielectric strength, etc.

### EXAMPLES:

The invention will be described more concretely by way of the following Examples.

In the Examples, the properties were measured in compliance with the methods described below.

### (1) Grain size of the silicon nitride powder

### Pretreating the sample;

As a pretreatment for the sample of silicon nitride powder, the silicon nitride powder was fired in the air at a temperature of about 500°**C** for 2 hours. The firing treatment was executed because of the reasons described below. Namely, in case the amount of oxygen is small on the surfaces of the silicon nitride powder or the surfaces of the grains are covered with a hydrophobic substance such as milling assistant during the milling causing the grains themselves to exhibit hydrophobic property, then the grains disperse insufficiently in the water and it becomes difficult to measure the grain diameters maintaining reproducibility. To avoid this, the sample or the silicon nitride powder was fired in the air at a temperature of about 200°**C** to about 500**°C** for about several hours to impart hydrophilic property to the silicon nitride powder. The silicon nitride powder can then be easily dispersed in an aqueous solvent, and the grain sizes thereof can be measured maintaining high reproducibility. Here, it has been confirmed that the firing in the air does not almost affect the grain sizes that are measured.

### Measuring the grain sizes;

90 ml of water and 5 ml of a sodium pyrophosphate of a concentration of 5% by mass were put into a beaker having an indicator of a maximum of 100 ml (inner diameter of 60 mm ***φ*** and a height of 70 mm) with good stirring. Thereafter, roughly a loopful of the sample or the silicon nitride powder was thrown therein and was dispersed therein by using an ultrasonic homogenizer (US-300E, tip diameter of 26 mm, manufactured by Nippon Seiki Co., Ltd.) with an amplitude of 50% (about 2 amperes) for 2 minutes.

The dispersion was conducted by inserting the tip in the beaker down to a position of the indicator of 20 ml.

Next, the thus obtained dispersion solution of the silicon nitride was measured for its grain size profile by using a laser diffraction·light scattering grain size profile measuring apparatus (Microtrack MT3300 EXII manufactured by Microtrac·Bell Co.). As for the measuring conditions, water (refractive index of 1.33) was selected as the medium, refractive index of 2.01 as the grain property, permeable as the grain permeability, and nonspherical shape as the grain shape.

The grain size was regarded to be an average grain size at a point of 50% on a cumulative curve of the grain size profiles measured in the above-mentioned grain size profile measurement. As for the ratio of the S grains, L grains and LL grains, the frequencies of the measured grain sizes were integrated and standardized to be 100% by mass. Thereafter, the integrated value of frequencies of grains smaller than that of the S grains was regarded to be a ratio of these grains. Further, the integrated values of frequencies of grains larger than the L grains and the LL grains were also regarded to be ratios of these grains.

### (2) Pressurized bulk density

To measure the pressurized bulk density, the powder was press-formed by using a commercially available mold for forming the powder. The pressurized bulk density was then calculated from the mass and the volume of the formed body. Namely, about 20 g of the silicon nitride powder was filled in the powder-forming mold of an inner diameter of 50 mm and was then compressed from the upper surface thereof with a pressure of 0.2 tons/cm². Thereafter, the formed body was taken out of the cylindrical container and was measured for its mass by using an electronic precision balance. The formed body was, further, measured for its diameter and thickness each at several points by using a micrometer. The volume of the formed body was calculated from the thus measured results while the pressurized bulk density thereof was calculated from the weight and the volume thereof.

Three formed bodies were prepared and were each measured for their densities. An average value thereof was shown as the pressurized bulk density.

### (3) Bulk density of the starting material powder under the pressure of nitrogen (when ignited)

The bulk density of the starting material powder was calculated by dividing the volume of the silicon powder filled in the heat-resistant reaction vessel by the weight thereof. The volume of the filled powder was found by calculation by using a ruler with length graduation, and measuring the longitudinal size, transverse size and depth of the filled layer. Here, the upper layer portion and the surface layer portion of the filled layer often become rugged to some extent and, therefore, should be flattened as smooth as possible.

The weight of the silicon powder was measured prior to being filled in the reaction vessel.

Before the ignition, the pressure-resistant closed type reactor was closed, in which the combustion synthesis was to be conducted, and the pressure therein was reduced to deaerate. Thereafter, nitrogen was fed to purge the interior with nitrogen, and the pressurizing operation was carried out with nitrogen. At this moment, the rate of feeding the nitrogen gas was adjusted to suppress the nitrogen gas from compressing the layer that has been filled and to attain the bulk density within the range contemplated by the invention.

To confirm the position of the upper surface of the layer filled in the reactor, there was employed a method of making a peep window in the casing of the reaction vessel. The heights of the upper surface thereof were measured at a moment when a reaction pressure was reached by feeding the nitrogen gas, and were regarded to be the bulk densities at the time of ignition in Examples and Comparative Examples.

### (4) β Conversion ratios

The X-ray diffraction (XRD) of the powder was measured by using the CuK**α** rays, and the weight ratio of the ***α*** phase and the ***β*** phase of the silicon nitride powder was calculated according to the method described in C.P. Gazzara and D.R. Messier: Ceram. Bull., 56 (1977), 777-780.

### (5) BET specific surface areas

### (Method of measuring the specific surface areas and the method of calculating the equivalent spherical diameters DBETs)

The specific surface area of the high purity silicon nitride powder of the present invention was measured by the BET one-point method based on the adsorption of nitrogen gas by using the BET specific surface area measuring apparatus (Macsorb HM model-1201) manufactured by Mountech Co.

Prior to measuring the specific surface area described above, the silicon nitride powder to be measured was heat-treated in advance in the air at 600°**C** for 30 minutes to remove organic matters adsorbed by the surfaces of the powder.

### (6) Contents of aluminum element and iron element

Impurity concentrations in the silicon powder were measured as described below. Namely, the silicon powder to be subjected to the combustion synthesis reaction was weighed into a plastic container, and to which a high purity concentrated nitric acid of a concentration of 70% was added. A high purity hydrofluoric acid of a concentration of 50% was added thereto dropwise while paying attention so that the decomposition reaction of silicon was not too vigorous. After the silicon powder has completely dissolved, a mixed acid of the nitric acid and the hydrofluoric acid left in the plastic container was completely evaporated on a hot plate. The heavy metal components adhered on the inner surface of the plastic container were recovered with a dilute nitric acid of 1%. From the thus obtained solution, the heavy metal components were determined by using an inductively coupled plasmaatomic emission spectroscopy (ICP-AES). Here, there was used the iCAP 6500 DUO manufactured by Thermo Fisher Scientific Co.

The impurity concentrations in the silicon nitride powder were measured by the method stipulated under the JIS R 1693:2007.

### (7) Preparation of the sintered bodies

To 100 parts by mass of the sample of the silicon nitride powder, there were added 5 parts by mass of an yttria powder as the main sintering assistant and 2 parts by mass of an alumina powder or a magnesia powder as the sub-sintering assistant. These components were mixed well in ethanol by using a planetary ball mill. The silicon nitride powder mixed with the sintering assistant was dried to a sufficient degree. Thereafter, about 20 g of the silicon nitride powder was monoaxially press-formed with a pressure of 0.2 tons/cm² according to the forming method employed by the measurement of pressurized bulk densities described in (2) above. There were thus prepared 15 pieces of disk-like formed bodies of a diameter of 50 mm ***φ***. Then each piece was sealed in a flexible rubber bag, thrown into water, and subjected to the CIP treatment such that a pressure of 2 tons/cm² was applied to the surfaces of the formed body.

To prevent the adhesion, a boron nitride powder was applied onto the surfaces of the CIP-treated disk-like formed bodies. The formed bodies were set five pieces by five pieces being overlapped one upon the other in a highly hermitical boron nitride box-type setter, and were fired in a nitrogen atmosphere of 0.8 MPaG at 1900°**C** for 5 hours to obtain sintered bodies.

### (8) Densities of the sintered bodies

The sintered bodies were measured for their densities by using an automatic gravimeter (Model DMA-220H manufactured by Shinko Denshi Co.). An average value of the 15 pieces was shown as the density of the sintered bodies.

### (9) Shrinkage factor

Fifteen pieces of the sintered bodies obtained by being sintered under the same conditions as described in (7) above were measured for their diameters (D2). The disk-like formed bodies of before being sintered were also measured for their diameters (D1). Values D1/D2 were calculated, and an average value thereof was shown as a shrinkage factor.

### (10) Thermal conductivities of the sintered bodies (W/m·K)

By using a laser flash thermophysical property measuring device (Model LFA-502 manufactured by Kyoto Denshi Kogyo Co.), the sintered bodies were measured for their thermal diffusivities. The thermal conductivity was found by multiplying the thermal diffusivity by the specific heat of the sintered body. As the specific heat of the silicon nitride sintered body, a value of 0.68 (J/g· K) was employed.

Three pieces of the sintered bodies were arbitrarily picked up from the 15 pieces of the sintered bodies prepared by the method described in (7) above, and from which were cut out the test pieces for measuring laser flash thermophysical properties. Thermal conductivities were calculated from the densities and thermal diffusivities of the three test pieces, and an average thermal conductivity of the three test pieces were shown as the thermal conductivity of the sintered bodies.

### (11) Three-point bending strengths of the sintered bodies (MPa)

Ten pieces were arbitrarily picked up from the 12 pieces prepared by the method described in (7) above from which the 3 pieces have already been removed for measuring the thermal conductivities. From the 10 pieces were cut out 10 test pieces for measuring the three-point bending strengths by the method stipulated under the JIS R 1601:2008. Here, there was used a test jig having a distance of 30 mm between the fulcrums. An average value of the three-point bending strengths of the 10 test pieces was shown as a three-point bending strength of the sintered bodies.

The following starting material powders were used for the following experiments.

### Starting material powder A

By using an airflow mill (jet mill) lined with the silicon nitride, high purity polycrystalline silicon of a class for use with the solar cells was milled to obtain a silicon powder having an average grain size of about 5 ***µ***m. The thus obtained silicon powder was used in an amount of 100% by mass as the starting material powder A. The amount of oxygen in the silicon powder obtained here was about 0.3% by mass.

### Starting material powder B

As the starting material powder, use was made of a mixed powder comprising 98.5% by mass of the silicon powder used for the starting material powder A and 1.5% by mass of the powder scraped off the massive product obtained in Example 1 described later and the silicon nitride powder obtained by scraping off the surfaces of the massive product.

### <Example 1>

The starting material powder was filled in the reaction vessel which was then set in the pressure-resistant closed reactor equipped with an igniting device and a gas feed/discharge mechanism. The pressure in the reactor was reduced to deaerate and, thereafter, the nitrogen gas was fed to purge with nitrogen. Thereafter, the nitrogen gas was gradually fed to elevate the pressure up to 0.7 MPa. The bulk density of the starting material powder was 0.5 g/cm³ at a moment when a predetermined pressure was reached (when ignited).

Thereafter, an end of the starting material powder in the reaction vessel was ignited to carry out the combustion synthesis reaction and to obtain a massive product comprising the silicon nitride. The massive product was rubbed with each other so as to be milled down to about 5 to 20 µm, and was then thrown in a suitable amount into a vibration mill to continue the fine milling for 6 hours. The fine milling machine and the fine milling method were the customary machine and the method. As a measure for preventing the contamination with heavy metals, however, the interior of the milling machine was lined with an urethane, and balls comprising chiefly the silicon nitride were used as the milling medium. Just prior to starting the fine milling, furthermore, an ethanol was added in an amount of 1% by mass as the milling assistant. The fine milling was conducted while placing the milling machine in the closed state. As a result, there was obtained a silicon nitride powder of substantially 100% ***β*** type having properties such as an average grain size of 0.72 ***µ***m, a specific surface area of 13.5 m²/g, 25% by mass of S grains, 32% by mass of L grains, and not less than 1% by mass of LL grains.

Table 1 shows the reaction conditions and properties of the obtained silicon nitride powder.

### [Sintered body 1]

To 100 parts by mass of the silicon nitride powder obtained by the method described above, there were added 5 parts by mass of yttria as the main combustion assistant and 2 parts by mass of alumina as the subsidiary combustion assistant. The above components were mixed together in a planetary ball mill, subjected to the above-mentioned monoaxial press forming and to the CIP forming, and was fired in a nitrogen atmosphere of atmospheric pressure at 1700°**C** for 5 hours.

The obtained sintered body had a density of 3.25 g/cm³, a shrinkage factor of 1.17, a thermal conductivity of 25 W/m·K, and a three-point bending strength of 850 MPa.

The sintered body of the silicon nitride powder had a high density and was very dense. The sintered body further had a small shrinkage factor and was also excellent in such properties as thermal conductivity and bending strength.

Table 2 shows the sintering conditions and properties of the sintered body.

### [Sintered body 2]

Use was made of the silicon nitride powder prepared by the method of Example 1. In producing the sintered body from this powder, there was used the subsidiary combustion assistant of magnesia instead of alumina. The components were mixed together by using the planetary ball mill, and were subjected to the monoaxial press forming and the CIP forming like in the case of the sintered body 1, followed by firing in a nitrogen atmosphere of 0.8 MPaG at 1900°**C** for 5 hours. Table 2 shows properties of the sintered body.

As shown in Table 2, the sintered body of the silicon nitride powder had a high density, was very dense, possessed a small shrinkage factor and was also excellent in such properties as thermal conductivity and bending strength.

### [Sintered body 3]

By using the silicon nitride powder prepared by the method of Example 1, a sintered body was produced under the same conditions as in the case of the sintered body 2 but changing the temperature for firing the sintered body into 1800°**C**. Table 2 shows the sintering conditions and properties of the sintered body.

There was obtained the sintered body having properties that were quite free of problems and excellent enough for the practical use though the properties were not as high as those of the case of the sintered body 2.

### <Example 2>

The silicon nitride powder was prepared according to the method of Example 1, and from which a massive product was obtained by conducting the combustion synthesis reaction while setting the bulk density of the starting material powder at the time of ignition to be slightly high as shown in Table 1. The obtained silicon nitride aggregates were digested and finely milled under the same conditions as in Example 1. As a result, there was obtained a silicon nitride powder of substantially 100% ***β*** type having properties as shown in Table 1.

### [Sintered body 4]

A sintered body was produced by using the above-mentioned silicon nitride powder and under the same conditions as in the case of the sintered body 2 of Example 1. There was thus obtained the silicon nitride sintered body shown in Table 2. The sintered body possessed properties that were as excellent as those of the sintered body 2.

### <Example 3>

A silicon nitride powder was prepared according to the method of Example 1 but conducting the combustion synthesis reaction while setting the bulk density of the starting material powder at the time of ignition to be slightly low as shown in Table 1 and also lowering the pressure during the reaction. As a result, there was obtained a silicon nitride powder of the ***β*** type containing, however, about 20% of the silicon nitride powder of the ***α*** type. Table 1 shows properties of the obtained silicon nitride powder.

### [Sintered body 5]

A sintered body was produced by using the silicon nitride powder that contained the silicon nitride powder of the **α** type mentioned above and under the same conditions as in the case of the sintered body 2 of Example 1. There was thus obtained the silicon nitride sintered body shown in Table 2. The sintered body possessed properties that were as excellent as those of the sintered body 2.

### <Example 4>

A silicon nitride powder was prepared in the same manner as in Example 1 but shortening the time for fine milling down to 5 hours. Table 1 shows properties of the obtained silicon nitride powder.

### [Sintered body 6]

By using the silicon nitride powder prepared by the method described above, a sintered body was produced under the same conditions as in the case of the sintered body 2 of Example 1. As a result, there was obtained the sintered body having excellent properties substantially free of problems though the three-point bending strength has slightly decreased as shown in Table 2.

### <Example 5>

A silicon nitride powder was prepared in the same manner as in Example 1 but extending the time for fine milling up to 12 hours. Table 1 shows properties of the obtained silicon nitride powder.

### [Sintered body 7]

By using the silicon nitride powder prepared by the method described above, a sintered body was produced under the same conditions as in the case of the sintered body 2 of Example 1. As a result, there was obtained the sintered body having an improved three-point bending strength though the thermal conductivity has slightly decreased as shown in Table 2.

### <Example 6>

The combustion synthesis reaction and the milling were executed in the same manner as in Example 1 but using the starting material powder B. Table 1 shows properties of the obtained silicon nitride powder.

### [Sintered body 8]

By using the silicon nitride powder prepared by the method described above, a sintered body was produced under the same conditions as in the case of the sintered body 2 of Example 1. As a result, there was obtained the sintered body having excellent properties as shown in Table 2.

### <Comparative Example 1>

By using a V type mixer, the starting material powder A and the silicon nitride powder obtained in Example 1 were mixed together at a weight ratio of 5:5 to a sufficient degree followed by the combustion synthesis reaction. The conditions in other respects were the same as those of Example 1. Table 1 shows properties of the obtained silicon nitride powder.

### [Sintered body 9]

By using the powder obtained by the method described above, a sintered body was produced under the same conditions as in the case of the sintered body 2 of Example 1. The shrinkage factor has increased but the thermal conductivity has decreased as represented by the properties of the sintered body shown in Table 2. This was attributed to that the combustion synthesis reaction was a mild reaction suppressing the melt-adhesion from becoming intense resulting, therefore, in an increase in the S grains and in a decrease in the L grains.

### <Comparative Example 2>

In Example 1, the pressure in the closed reactor was reduced to deaerate and, thereafter, the nitrogen gas was fed at an increased rate to purge with nitrogen. As a result, as shown in Table 1, the bulk density of the starting material powder acquired a large value at the time of ignition for executing the combustion synthesis reaction. The conditions in other respects were the same as those of Example 1 and under which a silicon nitride powder was prepared. Table 1 shows properties of the obtained silicon nitride powder.

### [Sintered body 10]

By using the powder obtained by the method described above, a sintered body was produced under the same conditions as in the case of the sintered body 2 of Example 1. The thermal conductivity has increased but the three-point bending strength has decreased as represented by the properties of the sintered body shown in Table 2. This was attributed to that the melt-adhesion was strongly accelerated during the combustion synthesis reaction resulting in an increase in the L grains and LL grains.

### <Comparative Example 3>

Table 1 shows properties of a commercially available silicon nitride powder prepared by the imide thermal decomposition method (see the patent document 1) according to which a silicon nitride powder is obtained by thermally decomposing an imide intermediate product that is formed by reacting silicon tetrachloride with ammonia.

### [Sintered body 11]

By using the silicon nitride powder described above, a sintered body was produced under the same conditions as in the case of the sintered body 2 of Example 1. As represented by properties shown in Table 2, the sintered body exhibited properties that were as excellent as those of the sintered body 2 of Example 1 but also exhibited an increased shrinkage factor.

### <Comparative Example 4>

Table 1 shows properties of a commercially available silicon nitride powder of almost the **α** type prepared by the direct nitriding method (see the patent document 2) according to which a silicon powder is directly reacted with nitrogen.

### [Sintered body 12]

By using the silicon nitride powder described above, a sintered body was produced under the same conditions as in the case of the sintered body 2 of Example 1. As represented by properties shown in Table 2, the sintered body exhibited a low density and a small bending strength.

**Table 1**

| | Reaction condition | | Silicon nitride powder | | | | | | | | |
|---|---|---|---|---|---|---|---|---|---|---|---|
| | Reaction pressure Mpa | Bulk density at ignition g/cm³ | Average grain size µm | Specific surface area m²/g | Ratio of grains % by mass | | | β conversion ratio % | Impurity concentrations % | | Pressurized bulk density g/cm³ |
| | | | | | S | L | LL | | Fe | Al | |
| Ex. 1 | 0.7 | 0.5 | 0.72 | 13.5 | 25 | 32 | <1 | 100 | 0.03 | 0.05 | 2.02 |
| Ex. 2 | 0.7 | 0.9 | 0.75 | 11.5 | 20 | 35 | <1 | 100 | 0.03 | 0.05 | 2.01 |
| Ex. 3 | 0.15 | 0.4 | 0.68 | 15.0 | 27 | 25 | <1 | 80 | 0.03 | 0.05 | 2.00 |
| Ex. 4 | 0.7 | 0.5 | 0.80 | 10.5 | 22 | 34 | 1.2 | 100 | 0.03 | 0.05 | 2.03 |
| Ex. 5 | 0.7 | 0.5 | 0.65 | 30.0 | 30 | 20 | <1 | 100 | 0.03 | 0.05 | 1.99 |
| Ex. 6 | 0.7 | 0.5 | 0.72 | 13.2 | 24 | 33 | <1 | 100 | 0.03 | 0.05 | 2.00 |
| Comp. Ex. 1 | 0.7 | 1.0 | 0.62 | 15.0 | 30 | 17 | <1 | 100 | 0.03 | 0.05 | 1.85 |
| Comp. Ex. 2 | 0.7 | 1.2 | 0.85 | 10.5 | 19 | 38 | 1.5 | 100 | 0.03 | 0.05 | 1.87 |
| Comp. Ex. 3 | - | - | 0.71 | 10.3 | 19 | 12 | <1 | <5 | 0.01 | 0.01 | 1.45 |
| Comp. Ex. 4 | - | - | 0.70 | 9.7 | 18 | 15 | <1 | <5 | 0.05 | 0.10 | 1.75 |

**Table 2**

| Silicon nitride powder | Sintered body | Sub-sintering assistant | Sintering temperature °C | Density g/cm³ | Shrinkage factor | Thermal conductivity W/m·k | Three-point bending strength Mpa |
|---|---|---|---|---|---|---|---|
| Ex. 1 | body 1 | alumina | 1700 | 3.25 | 1.17 | 25 | 850 |
| Ex. 1 | body 2 | magnesia | 1900 | 3.25 | 1.17 | 100 | 700 |
| Ex. 1 | body 3 | magnesia | 1800 | 3.24 | 1.17 | 92 | 680 |
| Ex. 2 | body 4 | magnesia | 1900 | 3.25 | 1.17 | 99 | 690 |
| Ex. 3 | body 5 | magnesia | 1900 | 3.23 | 1.18 | 92 | 750 |
| Ex. 4 | body 6 | magnesia | 1900 | 3.25 | 1.17 | 105 | 600 |
| Ex. 5 | body 7 | magnesia | 1900 | 3.26 | 1.18 | 65 | 800 |
| Ex. 6 | body 8 | magnesia | 1900 | 3.25 | 1.17 | 98 | 700 |
| Comp. Ex. 1 | body 9 | magnesia | 1900 | 3.23 | 1.20 | 75 | 560 |
| Comp. Ex. 2 | body 10 | magnesia | 1900 | 3.22 | 1.20 | 102 | 500 |
| Comp. Ex. 3 | body 11 | magnesia | 1900 | 3.17 | 1.30 | 88 | 680 |
| Comp. Ex. 4 | body 12 | magnesia | 1900 | 3.05 | 1.20 | 83 | 510 |

## Claims

1. A silicon nitride powder for sintering that has a ***β*** conversion ratio of not less than 80%, an average grain size D₅₀ of 0.5 to 1.2 ***µ***m as measured by the laser diffraction·light scattering method, a ratio of grains of not larger than 0.5 ***µ***m of 20 to 50% by mass, and a ratio of grains of not smaller than 1 ***µ***m of 20 to 50% by mass.

2. The silicon nitride powder for sintering according to claim 1, wherein the BET specific surface area is in a range of 10 to 40 m²/g.

3. The silicon nitride powder for sintering according to claim 2, wherein the BET specific surface area is in a range of not smaller than 15 m²/g.

4. The silicon nitride powder for sintering according to claim 2, wherein the BET specific surface area is in a range of not smaller than 20 m²/g.

## Patentansprüche

1. Siliziumnitridpulver zum Sintern, das ein β-Umwandlungsverhältnis von mindestens 80 %, eine durchschnittliche Korngröße D₅₀ von 0,5 bis 1,2 µm, gemessen mit der Laserbeugungs-Lichtsstreuungsmethode, ein Körnerverhältnis von höchstens 0,5 µm von 20 bis 50 Masse-%, und ein Körnerverhältnis von mindestens 1 µm von 20 bis 50 Masse-% aufweist.

2. Siliziumnitridpulver zum Sintern nach Anspruch 1, wobei die spezifische BET-Oberfläche in einem Bereich von 10 bis 40 m²/g liegt.

3. Siliziumnitridpulver zum Sintern nach Anspruch 2, wobei die spezifische BET-Oberfläche in einem Bereich liegt, der mindestens 15 m²/g beträgt.

4. Siliziumnitridpulver zum Sintern nach Anspruch 2, wobei die spezifische BET-Oberfläche in einem Bereich liegt, der mindestens 20 m²/g beträgt.

## Revendications

1. Poudre de nitrure de silicium destinée à un frittage qui présente un rapport de conversion *β* non inférieur à 80 %, une taille moyenne de grain D₅₀ de 0,5 à 1,2 *µ*m telle que mesurée par le procédé de diffusion de lumière-diffraction laser, un rapport des grains non supérieurs à 0,5 *µ*m de 20 à 50 % en masse, et un rapport des grains non inférieurs à 1 µm de 20 à 50 % en masse.

2. Poudre de nitrure de silicium destinée à un frittage selon la revendication 1, dans laquelle la surface spécifique BET est dans une plage de 10 à 40 m²/g.

3. Poudre de nitrure de silicium destinée à un frittage selon la revendication 2, dans laquelle la surface spécifique BET est dans une plage non inférieure à 15 m²/g.

4. Poudre de nitrure de silicium destinée à un frittage selon la revendication 2, dans laquelle la surface spécifique BET est dans une plage non inférieure à 20 m²/g.
